# EUROPÄISCHE PATENTANMELDUNG

(11) **EP 3 147 498 A1**
(43) Veröffentlichungstag der Anmeldung: **29.03.2017**
(21) Anmeldenummer: 16187318.7
(22) Anmeldetag: 06.09.2016
(51) Int. Cl.: F03D 1/06

(54) **ROTORBLATT, WINDENERGIEANLAGE, VERFAHREN ZUM HERSTELLEN EINES ROTORBLATTS UND ZUM AUFSTELLEN EINER WINDENERGIEANLAGE**

(30) Priorität: 25.09.2015 DE 102015012428
(71) Anmelder: Senvion GmbH, 22297 Hamburg (DE)
(72) Erfinder: KLEMME, Thomas, 24106 Kiel (DE); KORJAHN, Matthias, 24358 Ahlefeld-Bistensee (DE)
(74) Vertreter: Seemann & Partner Patentanwälte mbB

(57) **Zusammenfassung**

Die Erfindung betrifft ein Rotorblatt (4) einer Windenergieanlage (2), eine Windenergieanlage (2) sowie ein Verfahren zum Herstellen eines Rotorblatts (4) und zum Aufstellen einer Windenergieanlage (2). Das Rotorblatt (4) umfasst eine Saugseite, eine Druckseite, eine Rotorblattnase (14) und eine Rotorblatthinterkante (16), die sich zwischen einer Rotorblattwurzel (6) und einer Rotorblattspitze (8) erstrecken. An der Rotorblatthinterkante (16) sind Hinterkantenzacken (18) vorhanden, die zumindest abschnittsweise durch ein gelenkartiges Verbindungselement (20) mit der Rotorblatthinterkante (16) gekoppelt sind, so dass eine Schwenkbewegung der Hinterkantenzacken (18) ermöglicht ist.

## Beschreibung

Die Erfindung betrifft ein Rotorblatt einer Windenergieanlage, umfassend eine Saugseite, eine Druckseite, eine Rotorblattnase und eine Rotorblatthinterkante, die sich zwischen einer Rotorblattwurzel und einer Rotorblattspitze erstrecken, wobei an der Rotorblatthinterkante Hinterkantenzacken vorhanden sind. Ferner betrifft die Erfindung eine Windenergieanlage mit einem solchen Rotorblatt sowie ein Verfahren zum Herstellen eines Rotorblatts und ein Verfahren zum Aufstellen einer Windenergieanlage.

Die Rotorblätter einer Windenergieanlage umfassen stets eine Saugseite und eine Druckseite, die sich vielfach auf der Außenseite einer Saugseitenschale und einer Druckseitenschale erstrecken. Im Bereich einer Rotorblattnase sowie einer Rotorblatthinterkante sind die Saugseitenschale und die Druckseitenschale zusammengefügt, beispielsweise verklebt. So entsteht ein Rotorblatt, welches sich ausgehend von einer Rotorblattwurzel, an der es mit der Nabe der Windenergieanlage verbunden ist, bis zu einer Rotorblattspitze erstreckt.

Im Betrieb einer Windenergieanlage treten unvermeidbar Strömungsgeräusche an den Rotorblättern auf. Aus Lärmschutzgründen sind daher Mindestabstände, beispielsweise zu Wohngebieten oder anderen Schutzbereichen, einzuhalten. Dies beschränkt die Anzahl der möglichen Standorte, an denen solche Windenergieanlagen betrieben werden können.

Eine Maßnahme zum Reduzieren der Geräuschemission eines Rotorblatts besteht darin, dieses mit Hinterkantenzacken, sog. "Serrations", zu versehen. Serrations werden in einem äußeren Abschnitt des Rotorblatts an dessen Hinterkante vorgesehen. Ein solches Rotorblatt ist beispielsweise aus US 2011/0142666 A1 bekannt.

Es ist eine Aufgabe der Erfindung, ein Rotorblatt, eine Windenergieanlage sowie ein Verfahren zum Herstellen eines Rotorblatts und ein Verfahren zum Aufstellen einer Windenergieanlage anzugeben, wobei der Einfluss der Hinterkantenzacken auf die aerodynamischen Beiwerte des Rotorblatts verringert und die Montage der Windenergieanlage vereinfacht werden soll.

Die Aufgabe wird gelöst durch ein Rotorblatt einer Windenergieanlage, umfassend eine Saugseite, eine Druckseite, eine Rotorblattnase und eine Rotorblatthinterkante, die sich zwischen einer Rotorblattwurzel und einer Rotorblattspitze erstrecken, wobei an der Rotorblatthinterkante Hinterkantenzacken vorhanden sind, und wobei das Rotorblatt dadurch fortgebildet ist, dass die Hinterkantenzacken zumindest abschnittsweise durch ein gelenkartiges Verbindungselement mit der Rotorblatthinterkante gekoppelt sind, welches eine Schwenkbewegung der Hinterkantenzacken ermöglicht.

Die Konstruktion des Rotorblatts gemäß Aspekten der Erfindung beruht auf den folgenden Überlegungen. Hinterkantenzacken, wie sie zur Verringerung der Geräuschemission an Rotorblättern eingesetzt werden, sind traditionell fest mit den Rotorblättern verklebt. Die Hinterkantenzacken dienen zur Lärmreduktion und werden zur Lastreduktion entsprechend des vorliegenden Abströmwinkels an der Hinterkante des Rotorblatts befestigt. So entstehen zunächst keine zusätzlichen Auftriebskräfte. Ändert sich jedoch der Abströmwinkel des lokalen Profils durch Veränderung des Rotorblattanstellwinkels (Pitchwinkel), so wirken die Hinterkantenzacken wie eine Klappe (vergleichbar der Auftriebsklappe eines Flugzeugs) und erzeugen zusätzlichen Auftrieb am Rotorblatt.

Gemäß Aspekten der Erfindung wird diesen unerwünschten Effekten begegnet, indem die Hinterkantenzacken flexibel am Rotorblatt aufgehängt werden. So ist es möglich, dass sich die Hinterkantenzacken von selbst dem entsprechenden Abströmwinkel anpassen. Mit anderen Worten verändern die Hinterkantenzacken ihren Anstellwinkel gegenüber dem Rotorblatt und folgen der Richtung der abströmenden Luft. So treten auch außerhalb des drehzahlvariablen Bereichs keine zusätzlichen Auftriebskräfte auf. Da die Rotorblätter sehr dynamischen Anströmbedingungen ausgesetzt sind, ist die vorgesehen flexible Kopplung zwischen den Hinterkantenzacken und dem Rotorblatt besonders vorteilhaft.
Insbesondere ist das Verbindungselement so ausgebildet, dass es eine Schwenkbewegung in einer Profilebene des Rotorblatts ermöglicht. Das Verbindungselement ist bevorzugt so ausgestaltet, dass eine Schwenkachse, um die die Hinterkantenzacken gegenüber dem Rotorblatt schwenkbar sind, zumindest näherungsweise entlang der Rotorblatthinterkante verläuft. So wird die Möglichkeit geschaffen, dass die Hinterkantenzacken sich optimal der lokalen Abströmung an der Rotorblatthinterkante anpassen.

Gemäß einer weiteren Ausführungsform ist das Rotorblatt ferner dadurch fortgebildet, dass das Verbindungselement ein Dämpfungselement umfasst, welches dazu eingerichtet ist, die Schwenkbewegung der Hinterkantenzacken zu dämpfen.

Durch das Dämpfungselement wird vorteilhaft vermieden, dass die flexiblen Hinterkantenzacken zum Beispiel aufgrund von Turbulenzen im Wind zu flattern beginnen. Die Dämpfung ist dabei insbesondere so ausgelegt, dass die Hinterkantenzacken niederfrequenten Abströmwinkeländerungen folgen, hochfrequente Winkeländerungen, welche zu einem Flattern führen, jedoch unterdrückt werden.

Ferner ist gemäß einer Ausführungsform vorgesehen, dass das Verbindungselement eine Vorzugsstellung aufweist, in welcher die Hinterkantenzacken zumindest näherungsweise parallel zu einer angrenzenden Oberfläche des Rotorblatts liegen.

Bei einem Rotorblatt gemäß der genannten Ausführungsform ist der Transport vereinfacht. An den Transport von Rotorblättern, welche mit starren Hinterkantenzacken versehen sind, werden nämlich besonders hohe Anforderungen gestellt. Eine Beschädigung der Hinterkantenzacken während des Transports muss in jedem Fall vermieden werden. Da Rotorblätter mit starren Hinterkantenzacken jedoch in ihrem Endbereich schlecht aufgenommen werden können, ist ihre Handhabung erschwert.

Vorteilhaft wird bei dem Rotorblatt gemäß Aspekten der Erfindung die Möglichkeit geschaffen, die Hinterkantenzacken in eine Ruhestellung zu verbringen, welche eine Vorzugsstellung des Verbindungselements ist. Liegen die Hinterkantenzacken zumindest näherungsweise parallel zu einer angrenzenden Oberfläche des Rotorblatts, so können diese beispielsweise mit Hilfe einer selbstklebenden Schutzfolie an der Oberfläche des Rotorblatts fixiert werden. Die Handhabung des Rotorblatts erfolgt anschließend praktisch identisch zu einem Rotorblatt ohne Hinterkantenzacken. Gleichzeitig ist die Wahrscheinlichkeit für eine Beschädigung der Hinterkantenzacken während des Transports wesentlich verringert. Es ist bei einer derartigen Konstruktion des Rotorblatts beispielsweise möglich, die Blattspitzen in Taschen aufzunehmen, so wie dies für Rotorblätter ohne Hinterkantenzacken möglich ist. Für den Transport kann daher auf die vorhandene Infrastruktur sowie die vorhandenen Vorrichtungen zurückgegriffen werden.

Gemäß einer weiteren Ausführungsform ist das Rotorblatt dadurch fortgebildet, dass das Verbindungselement ein Festkörperverbindungselement, vorzugsweise aus einem elastischen Material, und/oder ein Scharnier ist.

Beispielsweise ist als elastisches Material ein Kunststoff vorgesehen. Es ist ebenso möglich, mehrere Kunststoffe in einem Schichtpaket entsprechend der gewünschten Eigenschaften, beispielsweise hinsichtlich Flexibilität und gleichzeitiger Dämpfung, miteinander zu kombinieren. So können beispielsweise ein flexibler und hochbelastbarer Kunststoff für eine lasttragende Schicht und ein dämpfender Kunststoff für eine dämpfende Schicht miteinander kombiniert werden.

Wird als gelenkartiges Verbindungselement ein Scharnier eingesetzt, so können dessen Dämpfungseigenschaften über die innere Reibung des Scharniers beeinflusst werden.

Die Dämpfung bzw. Reibung ist insbesondere so ausgewählt, dass die Hinterkantenzacken bei kleinen Änderungen des Abströmwinkels ihre aktuellen Einstellwinkel beibehalten. Erst bei größeren Veränderungen wird die der Verstellung entgegenwirkende Kraft der Dämpfung überwunden und die Hinterkantenzacken folgen der lokalen Abströmung.

Die Aufgabe wird außerdem gelöst durch eine Windenergieanlage mit einem Rotorblatt nach einem oder mehreren der zuvor genannten Aspekte. Auf die Windenergieanlage treffen gleiche oder ähnliche Vorteile zu, wie sie bereits im Hinblick auf das Rotorblatt erwähnt wurden, so dass auf Wiederholungen verzichtet werden soll. Die Aufgabe wird ferner gelöst durch ein Verfahren zum Herstellen eines Rotorblatts gemäß einem oder mehreren der zuvor genannten Aspekte, wobei an der Rotorblatthinterkante Hinterkantenzacken angebracht werden, indem die Hinterkantenzacken zumindest abschnittsweise durch ein gelenkartiges Verbindungselement mit der Rotorblatthinterkante gelenkartig gekoppelt werden, welches eine Schwenkbewegung der Hinterkantenzacken ermöglicht.

Auch auf das Verfahren zum Herstellen des Rotorblatts treffen gleiche oder ähnliche Vorteile zu, wie sie bereits im Hinblick auf das Rotorblatt gemäß Aspekten der Erfindung erwähnt wurden.

Die Aufgabe wird ferner gelöst durch ein Verfahren zum Aufstellen einer Windenergieanlage mit zumindest einem Rotorblatt nach einem oder mehreren der zuvor genannten Aspekte, wobei dieses Verfahren dadurch fortgebildet wird, dass das zumindest eine Rotorblatt in einem zerlegten Zustand bereitgestellt wird, in welchem die Hinterkantenzacken nicht mit der Rotorblatthinterkante gekoppelt sind, wobei das zumindest eine Rotorblatt im zerlegten Zustand an einen Aufstellort der Windenergieanlage transportiert wird und am Aufstellort der Windenergieanlage die Hinterkantenzacken mit dem Rotorblatt gekoppelt werden.

Vorteilhaft wird das Aufstellen einer Windenergieanlage vereinfacht, da beim Transport der Rotorblätter auf deren besondere Konstruktion, nämlich das Vorhandensein der Hinterkantenzacken, praktisch keine Rücksicht genommen werden muss. Die Montage der Hinterkantenzacken erfolgt nämlich erst am Aufstellort der Windenergieanlage.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in schematisch vereinfachter Ansicht,
- Fig. 2: eine schematisch vereinfachte Perspektivansicht eines Rotorblatts,
- Fig. 3: eine schematisch vereinfachte Perspektivansicht einer einzelnen Hinterkantenzacke, welche über ein gelenkartiges Verbindungselement mit einer Rotorblatthinterkante verbunden ist,
- Fig. 4: eine schematisch vereinfachte Draufsicht auf ein Detail im Bereich der Verbindung zwischen Hinterkantenzacken und einer Hinterkante des Rotorblatts, wobei ein gelenkartiges Verbindungselement zum Einsatz kommt,
- Fig. 5: eine schematisch vereinfachte Querschnittsansicht einer solchen Verbindung im Bereich der Rotorblatthinterkante und
- Fig. 6: eine schematisch vereinfachte Querschnittsansicht einer gelenkartigen Verbindung zwischen dem Rotorblatt und den Hinterkantenzacken.

In den Zeichnungen sind jeweils gleiche oder gleichartige Elemente und/oder Teile mit denselben Bezugsziffern versehen, so dass von einer erneuten Vorstellung jeweils abgesehen wird.

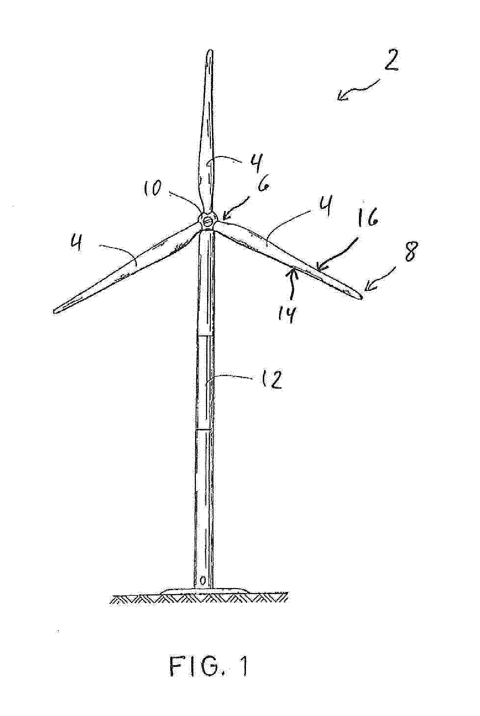

Fig. 1 zeigt eine Windenergieanlage 2 in schematisch vereinfachter Ansicht. Sie umfasst mehrere Rotorblätter 4, die sich zwischen einer Rotorblattwurzel 6 und einer Rotorblattspitze 8 erstrecken. An der Rotorblattwurzel 6 sind die Rotorblätter 4 mit einer Rotornabe 10 verbunden, welche die Hauptwelle der Windenergieanlage 2 antreibt. Der Rotor einschließlich weiterer Komponenten, welche in einem Maschinenhaus aufgenommen sind, wird von einer Tragstruktur 12, beispielsweise einem Turm, getragen.

Die Rotorblätter 4 umfassen jeweils eine Druckseite und eine Saugseite, welche an der Rotorblattnase 14 und an der Rotorblatthinterkante 16 zusammenlaufen (beispielhaft an lediglich einem der Rotorblätter mit Bezugszeichen dargestellt).

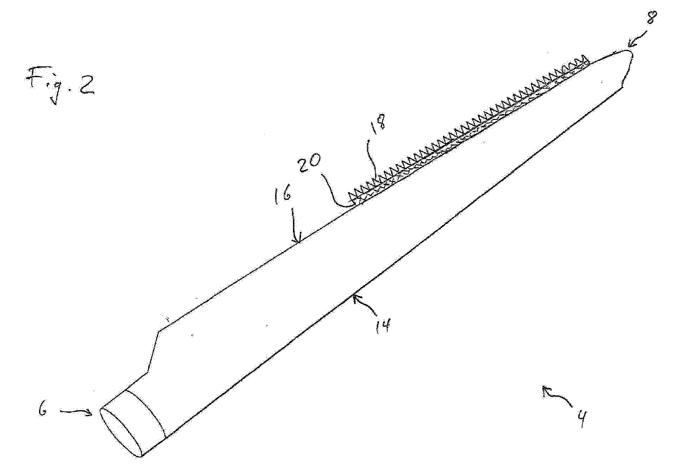

Fig. 2 zeigt eine schematisch vereinfachte Perspektivansicht eines Rotorblatts 4. Zur Verringerung der Schallemissionen des Rotorblatts 4 während des Betriebs der Windenergieanlage 2 weist dieses an der Rotorblatthinterkante 16 Hinterkantenzacken 18 auf. Die Hinterkantenzacken 18 sind zumindest abschnittsweise durch ein gelenkartiges Verbindungselement 20 mit der Rotorblatthinterkante 16 gekoppelt. Mit anderen Worten erstreckt sich also das gelenkartige Verbindungselement 20 zwischen der Rotorblatthinterkante 16 und den Hinterkantenzacken 18, zumindest in einem Abschnitt. Lediglich beispielhaft ist ein Rotorblatt 4 dargestellt, bei dem die Hinterkantenzacken 18 vollständig durch das gelenkartige Verbindungselement 20 mit der Rotorblatthinterkante 16 gekoppelt sind. Gemäß weiterer nicht dargestellter Ausführungsbeispiele ist vorgesehen, dass die Hinterkantenzacken 18 abschnittsweise über ein gelenkartiges Verbindungselement 20 mit der Rotorblatthinterkante 16 gekoppelt sind, im Übrigen jedoch starr mit dem Rotorblatt 4 verbunden sind. Das gelenkartige Verbindungselement 20 ermöglicht eine Schwenkbewegung der Hinterkantenzacken 18.

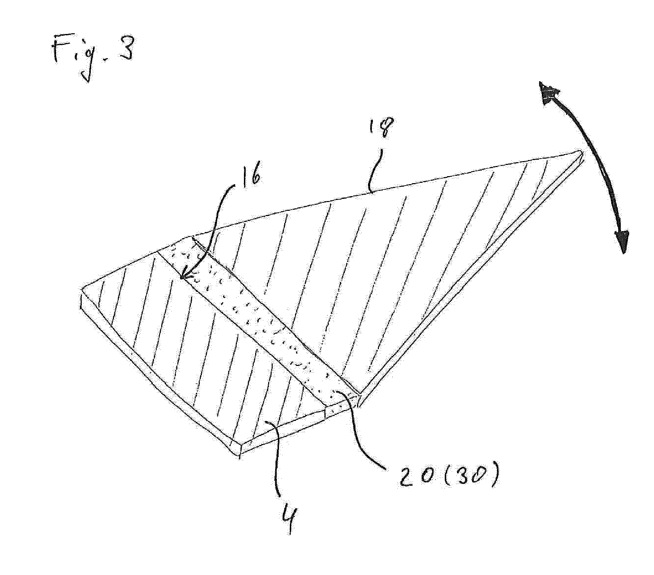

Fig. 3 zeigt in schematisch vereinfachter Perspektivansicht eine einzelne Hinterkantenzacke 18, welche über das gelenkartige Verbindungselement 20 mit der Rotorblatthinterkante 16 des ebenfalls abschnittsweise dargestellten Rotorblatts 4 verbunden ist. Beispielhaft ist in Fig. 3 ein Festkörperverbindungselement 30 aus einem elastischen Material, beispielsweise ein Kunststoff- oder Gummimaterial, als gelenkartiges Verbindungselement 20 gezeigt.

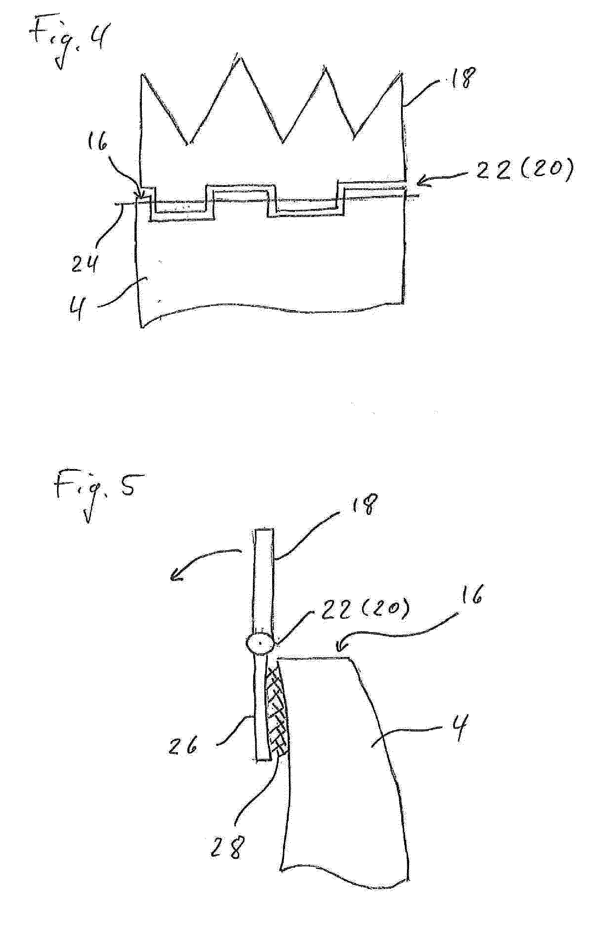

Fig. 4 zeigt in einer schematisch vereinfachten Draufsicht ein Detail im Bereich der Verbindung zwischen den Hinterkantenzacken 18, welche abschnittsweise dargestellt sind, und einer Rotorblatthinterkante 16 des ebenfalls abschnittsweise dargestellten Rotorblatts 4. In dem in Fig. 4 dargestellten Ausführungsbeispiel kommt als gelenkartiges Verbindungselement 20 ein Scharnier 22 zum Einsatz. Die Hinterkantenzacken 18 sind über eine Scharnierwelle 24, welche gleichzeitig die Schwenkachse der Hinterkantenzacken 18 definiert, mit dem Rotorblatt 4 verbunden.

Fig. 5 zeigt eine solche Verbindung in einer schematisch vereinfachten Querschnittsansicht. Bei dem dargestellten Beispiel sind die Hinterkantenzacken 18 über das Scharnier 22 als gelenkartiges Verbindungselement 20 mittelbar mit dem abschnittsweise dargestellten Rotorblatt 4 verbunden. Die Hinterkantenzacken 18 sind nämlich über das Scharnier 22 mit einer Verbindungslasche 26 gelenkartig verbunden, wobei diese Verbindungslasche 26 wiederum mit dem Rotorblatt 4 mit Hilfe eines Klebstoffs 28 verbunden ist.

Fig. 5 zeigt gleichzeitig einen Schnitt, welcher in der Profilebene des Rotorblatts 4 liegt. Das gelenkartige Verbindungselement 20 ermöglicht also eine Schwenkbewegung der Hinterkantenzacken 18 in einer Profilebene des Rotorblatts 4. Dies gilt ebenso für die übrigen Ausführungsbeispiele.

Das gelenkartige Verbindungselement 20 umfasst ferner ein Dämpfungselement, welches dazu eingerichtet ist, die Schwenkbewegungen der Hinterkantenzacken 18 zu dämpfen.

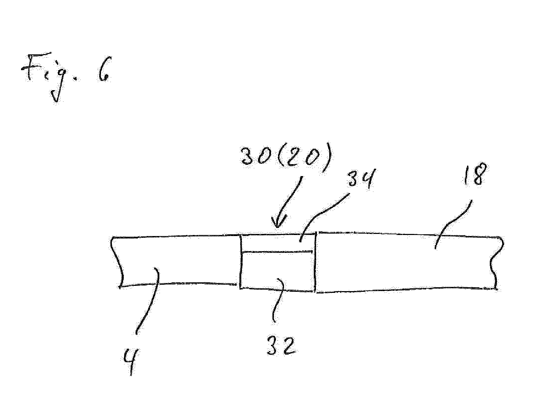

Fig. 6 zeigt in einer schematisch vereinfachten Querschnittsansicht eine Verbindung zwischen dem Rotorblatt 4 und den Hinterkantenzacken 18, wobei als Verbindungs-element 20 ein in Sandwich-Bauweise aufgebautes Festkörperverbindungselement 30 zum Einsatz kommt. Dieses ist aus einer Tragschicht 32 aus einem hochbelastbaren flexiblen Kunststoff und einer Dämpfungsschicht 34 aus einem dämpfenden Kunststoffmaterial, welches beispielsweise eine hohe innere Reibung aufweist, aufgebaut. Die Tragschicht 32 und die Dämpfungsschicht 34 sind insbesondere vollflächig miteinander verbunden und bilden so das Festkörperverbindungselement 30 aus. Die Dämpfungsschicht 34 erfüllt in diesem Zusammenhang die Aufgabe eines Dämpfungselements und dämpft insbesondere hochfrequente Anteile einer Schwingung der Hinterkantenzacken 18 gegenüber dem Rotorblatt 4. Kommt, wie beispielsweise in den Fig. 4 und 5 gezeigt, ein Scharnier 22 zum Einsatz, so kann die Dämpfung über die innere Reibung des Scharniers 22 eingestellt werden.

Ferner ist insbesondere vorgesehen, dass das Verbindungselement 20 eine Vorzugsstellung aufweist, in welcher die Hinterkantenzacken 18 zumindest näherungsweise parallel zu einer angrenzenden Oberfläche des Rotorblatts 4 liegen. Diese Stellung ist beispielsweise erreicht, wenn die Hinterkantenzacken 18 in der Darstellung von Fig. 5 entlang der mit einem Pfeil angedeuteten Richtung bis auf die Verbindungslasche 26 geklappt werden, so dass diese beiden Teile aneinander liegen. Eine solche Konfiguration ist zum Transport des Rotorblatts 4 besonders geeignet, da die Hinterkantenzacken 18 nicht über die Rotorblatthinterkante 16 hinausragen und somit die Gefahr potentieller Beschädigungen beim Transport wesentlich verringert ist.

Gemäß einem Verfahren zum Herstellen eines Rotorblatts gemäß einem oder mehreren der zuvor genannten Aspekte werden an der Rotorblatthinterkante 16 Hinterkantenzacken 18 angebracht, indem die Hinterkantenzacken 18 zumindest abschnittsweise durch ein gelenkartiges Verbindungselement 20 mit der Rotorblatthinterkante 16 gelenkartig gekoppelt werden, so dass eine Schwenkbewegung der Hinterkantenzacken 18 ermöglicht ist.

Ferner ist ein Verfahren zum Aufstellen einer Windenergieanlage 2 mit zumindest einem Rotorblatt 4 gemäß einem oder mehreren der zuvor genannten Aspekte vorgesehen. Dabei wird das Rotorblatt 4 in einem zerlegten Zustand bereitgestellt, in welchem die Hinterkantenzacken 18 nicht mit der Rotorblatthinterkante 16 gekoppelt sind. Anschließend wird das Rotorblatt 4 in zerlegtem Zustand, d.h. das Rotorblatt 4 ohne die Hinterkantenzacken 18 und die Hinterkantenzacken 18 separat dazu an einen Aufstellort der Windenergieanlage 2 transportiert. Erst am Aufstellort der Windenergieanlage 2 werden die Hinterkantenzacken 18 mit dem Rotorblatt 4 gekoppelt. Somit ist die Gefahr dafür, die Hinterkantenzacken 18 während des Transports zu beschädigen, wesentlich verringert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Rotorblatt
- 6: Rotorblattwurzel
- 8: Rotorblattspitze
- 10: Rotornabe
- 12: Tragstruktur
- 14: Rotorblattnase
- 16: Rotorblatthinterkante
- 18: Hinterkantenzacken
- 20: Verbindungselement
- 22: Scharnier
- 24: Scharnierwelle
- 26: Verbindungslasche
- 28: Klebstoff
- 30: Festkörperverbindungselement
- 32: Tragschicht
- 34: Dämpfungsschicht

## Patentansprüche

1. Rotorblatt (4) einer Windenergieanlage (2), umfassend eine Saugseite, eine Druckseite, eine Rotorblattnase (14) und eine Rotorblatthinterkante (16), die sich zwischen einer Rotorblattwurzel (6) und einer Rotorblattspitze (8) erstrecken, wobei an der Rotorblatthinterkante (16) Hinterkantenzacken (18) vorhanden sind, **dadurch gekennzeichnet, dass** die Hinterkantenzacken (18) zumindest abschnittsweise durch ein gelenkartiges Verbindungselement (20) mit der Rotorblatthinterkante (16) gekoppelt sind, welches eine Schwenkbewegung der Hinterkantenzacken (18) ermöglicht.

2. Rotorblatt (4) nach Anspruch 1, **dadurch gekennzeichnet, dass** das Verbindungselement (20) eine Schwenkbewegung in einer Profilebene des Rotorblatts (4) ermöglicht.

3. Rotorblatt (4) nach Anspruch 1 oder 2, **dadurch gekennzeichnet, dass** das Verbindungselement (20) ein Dämpfungselement umfasst, welches dazu eingerichtet ist, die Schwenkbewegung der Hinterkantenzacken (18) zu dämpfen.

4. Rotorblatt (4) nach einem der Ansprüche 1 bis 3, **dadurch gekennzeichnet, dass** das Verbindungselement (20) eine Vorzugsstellung aufweist, in welcher die Hinterkantenzacken (18) zumindest näherungsweise parallel zu einer angrenzenden Oberfläche des Rotorblatts (4) liegen.

5. Rotorblatt (4) nach einem der Ansprüche 1 bis 4, **dadurch gekennzeichnet, dass** das Verbindungselement (20) ein Festkörperverbindungselement (30), vorzugsweise aus einem elastischen Material, und/oder ein Scharnier (22) ist.

6. Windenergieanlage (2) mit einem Rotorblatt (4) nach einem der Ansprüche 1 bis 5.

7. Verfahren zum Herstellen eines Rotorblatts (4) nach einem der Ansprüche 1 bis 5, **dadurch gekennzeichnet, dass** an der Rotorblatthinterkante (16) Hinterkantenzacken (18) angebracht werden, indem die Hinterkantenzacken (18) zumindest abschnittsweise durch ein gelenkartiges Verbindungselement (20) mit der Rotorblatthinterkante (16) gelenkartig gekoppelt werden, welches eine Schwenkbewegung der Hinterkantenzacken (18) ermöglicht.

8. Verfahren zum Aufstellen einer Windenergieanlage (2) mit zumindest einem Rotorblatt (4) nach einem der Ansprüche 1 bis 5, **dadurch gekennzeichnet, dass** das zumindest eine Rotorblatt (4) in einem zerlegten Zustand bereitgestellt wird, in welchem die Hinterkantenzacken (18) nicht mit der Rotorblatthinterkante (16) gekoppelt sind, wobei das zumindest eine Rotorblatt (4) im zerlegten Zustand an einen Aufstellort der Windenergieanlage (2) transportiert wird und am Aufstellort der Windenergieanlage (2) die Hinterkantenzacken (18) mit dem Rotorblatt (4) gekoppelt werden.
